# EUROPÄISCHE PATENTSCHRIFT

(11) **EP 0 394 836 B1**
(45) Veröffentlichungstag und Bekanntmachung des Hinweises auf die Patenterteilung: **11.08.1993**
(21) Anmeldenummer: 90107423.7
(22) Anmeldetag: 19.04.1990
(51) Int. Cl.: F16B 5/02, A63C 9/00

(54) **Montageplatte insbesondere für Skibindungsteile**
Mounting plate especially for members of ski bindings
Plaque de montage en particulier pour éléments de fixations de skis

(30) Priorität: 28.04.1989 DE 8905417 U
(43) Veröffentlichungstag der Anmeldung: 31.10.1990
(73) Patentinhaber: Marker Deutschland GmbH, 82438 Eschenlohe (DE)
(72) Erfinder: Mickiewicz, Josef, D-8105 Farchant (DE)
(74) Vertreter: Gossel, Hans K., Dipl.-Ing.

(56) Entgegenhaltungen:
- CH-A- 512 923
- DE-A- 2 843 107
- US-A- 4 640 524

## Beschreibung

Die Erfindung bezieht sich auf Montageplatten zum Befestigen eines Gegenstandes mittels mindestens einer Schraube an einem anderen gemäß den Oberbegriffen des Anspruchs 1 bzw. des Anspruchs 2.

Aus der US-A-4,640,524 ist bereits eine Montageplatte bekannt, in der zumindest ein, den jeweiligen Kopf der Schraube aufnehmendes Loch vorgesehen ist, das oberhalb des Kopfes mehrere diesen hintergreifende Vorsprünge aufweist, die die Schraube gegen Herausfallen sichern. Diese Vorsprünge sind angeschrägt, so daß insbesondere der Kopf einer Senkschraube bei der Vormontage an ihnen entlanggleiten kann. Bei der Vormontage wird aufgrund eines geringfügigen Montagedrucks, der auf den Schraubenkopf aufgeprägt wird, die jeweilige Spitze der zu diesem Zweck elastischen Vorsprünge ausgelenkt, so daß die Schraube in ihre Montageposition bringbar ist.

Derartige Montageplatten haben in großem Maße Eingang in die Praxis gefunden und sich im wesentlichen auch gut bewährt. Es hat sich jedoch gezeigt, daß in bestimmten Anwendungsfällen, beispielsweise bei der Befestigung von Skibindungsteilen, die Montage dadurch langwierig und umständlich ist, daß konstruktionsbedingt die Montageplatte nicht sofort positionsgenau zum Anschrauben an den jeweiligen Gegenstand herangebracht werden kann.

Diesbezüglich eine Vereinfachung und Erleichterug zu schaffen, ist Zweck der vorliegenden Erfindung.

Ausgehend von einer Montageplatte nach dem Oberbegriff des Anspruchs 1 ist dies gemäß einer ersten Alternative der Erfindung durch die weiteren Merkmale des kennzeichnenden Teils des Anspruchs 1 gelöst. Gemäß dieser Lösung greift das Halteelement mit einem hohlzylindrischen Teil in das Schraubenloch ein und stützt sich mit einem Flansch anschraubseitig an der Montageplatte ab. Das Halteelement ist topfförmig und federnd ausgebildet und weist in einem den Boden bildenden Teil ein Schraubenloch auf, dessen Rand in das Gewinde der Schraube eingreift. Der hohlzylindrische Teil ist vom Schaft der Schraube beabstandet. Hier bietet der Boden im Zusammenwirken mit dem hohlzylindrischen Teil der Schraube die Möglichkeit des elastischen Ein- und Ausfederns. Die Schraube wird also im montagebereiten Zustand der Platte in dieser derart elastisch gehalten, daß die vorstehende Schraubenspitze ein- und ausfedern kann. Hierdurch wird bei einem nicht paßgenauen Anbringen der Montageplatte an den Gegenstand, der zuvor mit einem Schraubenloch versehen worden ist, die vorstehende Schraubenspitze zurückgedrückt. Anschließend wird die Montageplatte in ihre endgültige Position verschoben und in dieser dadurch fixiert, daß die Schraube mit ihrer Spitze in das Schraubenloch eingreift. Ein nicht paßgenaues Anbringen der Montageplatte ist verschiedentlich konstruktionsbedingt notwendig. Andererseits ergibt es sich aber vielfach auch dann, wenn der Monteur beim Anbringen der Montageplatte das Schraubenloch nicht mehr sehen kann.

Ausgehend von einer Montageplatte nach dem Oberbegriff des Anspruchs 2, bei der in der Montageplatte oder in einem ihr zugeordneten Teil ein den Kopf der Schraube aufnehmendes Loch vorgesehen ist, das oberhalb des Kopfes einen diesen hintergreifenden Vorsprung aufweist, der die Schraube gegen Herausfallen sichert, besteht eine zweite alternative erfindungsgemäße Lösung darin, daß der Kopf der Schraube von dem Vorsprung entsprechend dem Einfederweg beabstandet ist und daß wenigstens ein, diesen Abstand überbrückendes Federelement vorgesehen ist.

In konstruktiver Ausgestaltung dieser Merkmale kann als Federelement ein elastischer Ring dienen. Ebensogut ist es aber auch möglich, daß an den Vorsprung eine Federzunge anschließt.

Anhand der beiliegenden Zeichnungen sind im folgenden Ausführungsbeispiele der erfindugnsgemäßen Montageplatte beschrieben. Es zeigen:
- Figur 1:: einen Ausschnitt der Montageplatte mit bereits eingebrachter Schraube,
- Figur 2:: den Ausschnitt nach Figur 1 im an einen Gegenstand herangebrachten Zustand der Montageplatte,
- Figur 3:: eine Darstellung entsprechend Figur 2, bei der sich jedoch die Montageplatte in ihrer Anschraubposition befindet und
- Figur 4: und
- Figur 5:: jeweils eine der Figur 1 entsprechende Darstellung weiterer Ausführungen.

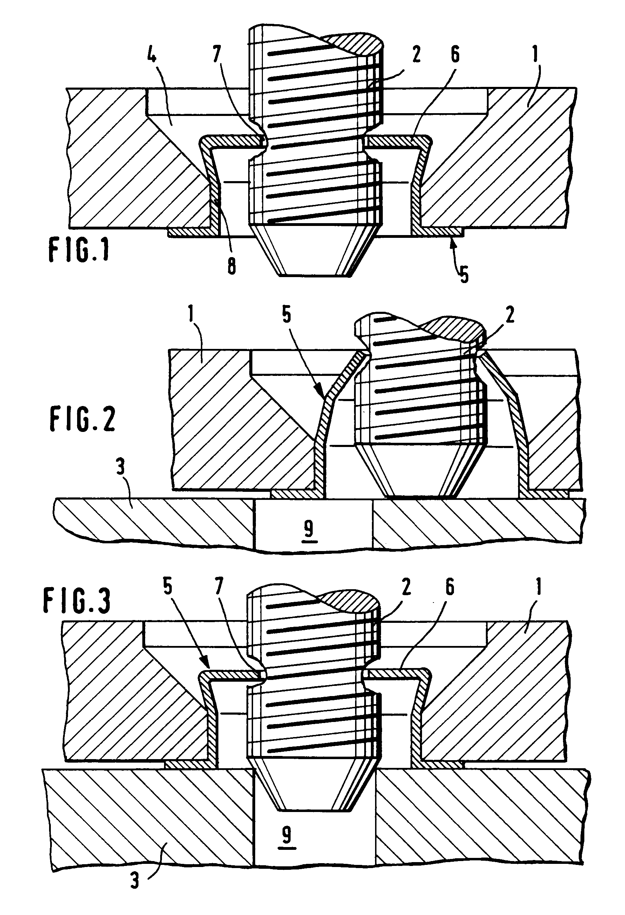

In Fig. 1 ist ein Ausschnitt einer Montageplatte 1 dargestellt, die zum Befestigen eines nicht dargestellten Gegenstandes mittels einer Schraube 2 an einem Gegenstand 3 (siehe Fig. 2) dient. Von der Schraube ist nur der Schaft mit der sich verjüngenden Schraubenspitze dargestellt. In ein Schraubenloch 4 der Montageplatte greift ein Halteelement 5 für die Schraube ein, das topfförmig ausgebildet ist und sich mit einem Flansch anschraubseitig an der Montageplatte 1 abstützt. In dem den Boden 6 des Topfes bildenden Teil des Halteelementes ist ein Schraubenloch vorgesehen, dessen Rand 7 in das Gewinde der Schraube eingreift. Die Anordnung ist dabei so getroffen, daß der hohlzylindrische Teil 8 des Tofpes vom Schaft der Schraube 2 beabstandet ist. Die Schraube ist in bekannter Weise schon fabrikmäßig eingebracht, und zwar derart, daß ihre verjüngte Schraubenspitze gegenüber der Unterseite der Montageplatte vorsteht. Gegebenenfalls kann der Rand 7 mit Einschnitten versehen sein, so daß er sich der Gewindesteigung anpassen kann.

Fig. 2 zeigt die Montageplatte 1 im an den Gegenstand 3 herangebrachten Zustand. Der Gegenstand 3 besitzt ein Schraubenloch 9, in das die Schraube 2 einschraubbar ist, um die Montageplatte 1 an dem Gegenstand 3 festzulegen. Wie die Fig. erkennen läßt, ist die Schraube 2 gegenüber dem Loch 9 versetzt. Um auch in diesem Fall die Montageplatte an den Gegenstand heranbringen zu können, ist gemäß dem Hauptmerkmal der vorliegenden Neuerung das Haltelement 5 so ausgebildet, daß es ein Einfedern der vorstehenden Schraubenspitze wie dargestellt gestattet.

Dieser Zustand tritt in der Praxis häufig auf, sei es einmal, daß ein nicht paßgenaues Anbringen der Montageplatte konstruktionsbedingt notwendig ist oder daß sich dieses dadurch ergibt, daß der Monteur beim Anbringen der Montageplatte das Schraubenloch nicht sehen kann. In jedem Fall läßt sich die Montageplatte in ihre endgültige Position verschieben. Erreicht sie diese, wird sie automatisch darin fixiert, da die Schraube in dem Moment ausfedert und mit ihrer Spitze in das Schraubenloch 9 eingreift. Dieser Zustand ist in Fig. 3 dargestellt.

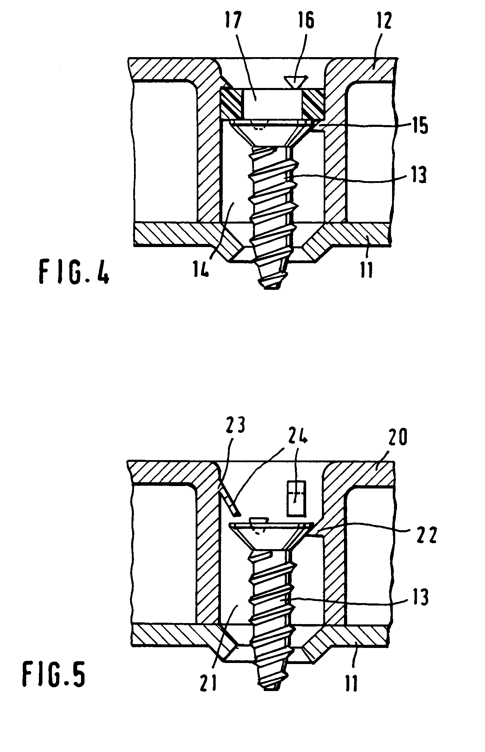

Fig. 4 zeigt eine zweite Ausführung der erfindungsgemäßen Montageplatte. Diese ist mit 11 bezeichnet und trägt einen ihr fest zugeordneten Teil 12. In dem Teil 12 ist ein den Kopf einer Schraube 13 aufnehmendes Loch 14 vorgesehen. In dieses ist die Schraube wiederum fabrikmäßig eingebracht. Der Schraubenkopf liegt beispielsweise drei über dem Umfang verteilten elastischen Vorsprüngen 15 auf. In einem Abstand vom Schraubenkopf, der dem Überstand der Schraubenspitze über die Montageplatte entspricht, befindet sich eine zweite Reihe von elastischen Vorsprüngen 16. Überbrückt wird dieser Abstand durch einen als Federelement dienenden elastischen Ring 17. Die Anordnung funktioniert wie die zuvor beschriebene, so daß auf die Darstellung des Gegenstandes, an dem die Montageplatte 11 zu befestigen ist, verzichtet ist. Der elastische Ring 17 gestattet das Einfedern der Schraubenspitze und bewirkt anschließend bei Erreichen der paßgerechten Position der Montageplatte das Ausfedern der Schraubenspitze.

Fig. 5 zeigt eine Abwandlung der Ausführung nach Fig. 4. Die Montageplatte 11 trägt wiederum einen ihr fest zugeordneten Teil 20, der mit einem den Kopf der Schraube 13 aufnehmenden Loch 21 versehen ist. Der Schraubenkopf liegt auch hier drei über dem Umfang verteilten elastischen Vorsprüngen 22 auf. Zum Unterschied gegenüber der Ausführung nach Fig. 4 besitzen Vorsprünge 23, die mit Abstand vom Schraubenkopf in dem Loch vorgesehen sind, jeweils eine Verlängerung 24, die Federzungen bilden und den Abstand zum Schraubenkopf überbrücken. Sie übernehmen damit die Funktion des elastischen Ringes 17 gemäß Fig. 4.

Für die Montageplatte gemäß der Erfindung ergibt sich eine Vielzahl von Anwendungsmöglichkeiten. Eine Möglichkeit ist beipsielsweise auf dem Skibindungssektor gegeben. In diesem Fall ist die Montageplatte 1 bzw. 11 entweder die Grundplatte eines Skibindungsteils bzw. die Halteklammer für eine Schiene des Skibindungsteils. Den Gegenstand 3 bildet in diesem Fall ein Ski.

## Patentansprüche

1. Montageplatte mit mindestens einer Schraube zum Befestigen eines Gegenstandes an einem anderen, insbesondere Grundplatte eines auf einem Ski zu befestigenden Skibindungsteils, wobei die Schraube mittels wenigstens eines Halteelementes in einem Schraubenloch der Platte nach einem fabrikmäßigen Einbringen derart gehalten ist, daß die verjüngte Schraubenspitze gegenüber der Unterseite der Plattenseite vorsteht,
**dadurch gekennzeichnet,**
daß das Halteelement (5) mit einem hohlzylindrischen Teil (8) in das Schraubenloch (4) eingreift und sich mit einem Flansch anschraubseitig an der Montageplatte (1) abstützt, daß das Halteelement (5) topfförming und federnd ausgebildet ist und in einem den Boden bildenden Teil (6) ein Schraubenloch aufweist, dessen Rand (7) in das Gewinde der Schrauben (2) eingreift und daß der hohlzylindrische Teil (8) vom Schaft der Schraube (2) beabstandet ist.

2. Montageplatte mit mindestens einer Schraube zum Befestigen eines Gegenstandes an einem anderen, insbesondere Grundplatte eines auf einem Ski zu befestigenden Skibindungsteils, wobei die Schraube mittels wenigstens eines Halteelementes in einem Schraubenloch der Platte nach einem fabrikmäßigen Einbringen derart gehalten ist, daß die verjüngte Schraubenspitze gegenüber der Unterseite der Plattenseite vorsteht, wobei in einem der Montageplatte zugeordneten Teil ein den Kopf der Schraube (13) aufnehmendes Loch (14, 21) vorgesehen ist, das oberhalb des Kopfes wenigstens einen diesen hintergreifenden Vorsprung (16, 23) aufweist, der die Schraube (13) gegen Herausfallen sichert,
**dadurch gekennzeichnet,**
daß der Kopf der Schraube (13) von dem Vorsprung (16, 23) entsprechend dem Einfederweg beabstandet ist und daß wenigstens ein diesen Abstand überbrückendes Federelement (17, 24) vorgesehen ist.

3. Montageplatte nach Anspruch 2, dadurch gekennzeichnet, daß als Federelement ein elastischer Ring (17) dient.

4. Montageplatte nach Anspruch 3, dadurch gekennzeichnet, daß an den Vorsprung (23) eine Federzunge (24) anschließt.

## Claims

1. A mounting plate comprising at least one screw for the attachment of an object on another object, more particularly in the form of the base plate of a ski binding component to be mounted on a ski, said screw being so held by means of at least one holding element in a screw hole in the plate after fitting by the manufacturer that the tapering screw tip projects past the lower side of the mounting plate,
**characterized in that**
the holding element (5) has a tubular part (8) extending into the screw hole (4) and has a flange bearing against the screwing side of the mounting plate (1), in that the holding element (5) is made in the form of a resilient pot and has a screw hole in a part (6) constituting the floor, the edge (7) of the screw hole being in engagement with the thread of the screws (2) and in that the tubular part (8) is spaced from the shank of the screw (2).

2. A mounting plate comprising at least one screw for the attachment of an object on another object, more particularly in the form of the base plate of a ski binding component to be mounted on a ski, said screw being so held by means of at least one holding element in a screw hole in the plate after fitting by the manufacturer that the tapering screw tip projects past the lower side of the mounting plate, a hole (14 and 21) being provided in a part associated with the mounting plate and receiving the head of the screw (13), said hole (14 and 21) having at least one projection (16 and 23) fitting around the head and being placed thereover, said projection preventing the screw (13) from falling out of place,
**characterized in that**
the head of the screw (13) is spaced from the projection (16 and 23) by a distance corresponding to the stroke of the inward resilient action and in that at least one spring element (17 and 24) is provided bridging over such distance.

3. The mounting plate as claimed in claim 2, characterized in that an elastic ring (17) is used as a resilient element.

4. The mounting plate as claimed in claim 3, characterized in that a resilient lug (24) adjoins the projection (23).

## Revendications

1. Plaque de montage comprenant au moins une vis pour fixer un objet à un autre, notamment une plaque de base d'un élément de fixation de ski à fixer sur un ski, la vis étant retenue au moyen d'au moins un élément de retenue dans un trou de vis de la plaque après une insertion en usine, de telle sorte que la pointe de vis effilée fait saillie par rapport au côté inférieur du côté de plaque, caractérisée en ce que l'élément de retenue (5) vient en prise avec une pièce cylindrique creuse (8) dans le trou de vis (4) et prend appui par un rebord, côté vissage, sur la plaque de montage (1), en ce que l'élément de retenue (5) est réalisé en forme de pot et élastique et présente dans une pièce (6) constituant le fond un trou de vis dont le bord (7) vient en prise avec le filetage des vis (2) et ce que la pièce cylindrique creuse (8) se trouve à une certaine distance de la tige de vis (2).

2. Plaque de montage comprenant au moins une vis pour fixer un objet à un autre, notamment une plaque de base d'un élément de fixation de ski à fixer sur un ski, la vis étant maintenue au moyen d'au moins un élément de retenue dans un trou de vis de la plaque après une insertion en usine, de telle sorte que la pointe de vis effilée fait saillie par rapport au côté inférieur du côté de plaque, dans une pièce associée à la plaque de montage étant prévu un trou (14, 21) recevant la tête de la vis (13) et qui présente au-dessus de la tête au moins une saillie (16, 23) passant derrière celle-ci, qui empêche une chute de la vis (13), caractérisée en ce que la tête de vis (13) se trouve à une distance de la saillie (16, 23) qui correspond à la trajectoire d'insertion élastique, et en ce qu'il est prévu au moins un élément élastique (17, 24) couvrant cette distance.

3. Plaque de montage selon la revendication 2, caractérisée en ce qu'un anneau élastique (17) sert d'élément élastique.

4. Plaque de montage selon la revendication 3, caractérisée en ce qu'une lame ou languette élastique (24) fait suite à la saillie (23).
